# EUROPEAN PATENT SPECIFICATION

(11) **EP 2 252 924 B1**
(45) Date of publication and mention of the grant of the patent: **23.11.2011**
(21) Application number: 09704681.7
(22) Date of filing: 26.01.2009
(51) Int. Cl.: G06F 3/01, G06F 3/042

(54) **INTERACTIVE PROJECTOR MODULE**
INTERAKTIVES PROJEKTORMODUL
MODULE INTERACTIF DE PROJECTEUR

(30) Priority: 25.01.2008 IT RM20080046
(43) Date of publication of application: 24.11.2010
(73) Proprietor: Stark S.r.l., 60143 Cagli (PS) (IT)
(72) Inventor: BURONI, Paolo, I-60143 Cagli (PS) (IT)
(74) Representative: Leone, Mario
(86) International application number: PCT/IB2009/050297
(87) International publication number: WO 2009/093222

(56) References cited:
- EP-A- 1 441 514

## Description

The present invention refers to an interactive projector module of the kind used for projecting variable images on a screen and allows an operator to interact with the images and to vary them.

This module can be used in any virtual reality application, from videogames to didactic projections.

In known modules, it is asked the operator to operate acting on control instruments such as keyboards, knobs, console and so on. This requires handling skills that not everyone have.

Systems are known using image recognition, but the operator cannot interfere with the projected image, thus thwarting the virtual reality effect.

EP 1441514 A disclose a display device including a projector and an image sensor provided to capture the projected image.

The technical problem underlying the present invention is to provide an interactive projector module allowing to overcome the above-mentioned drawbacks. Such problem is solved by a module comprising:
- a projector, projecting images on a screen according to a projecting direction;
- an image detector, provided between said projector and said screen, detecting images in a field of view according to a detecting direction crossing said projecting direction;
- a processor, connected to said image detector and to said projector, comprising an image recognition software;
such that a gesture detected in said field of view is converted in an input command for said projector, varying accordingly the projected images.

With this arrangement, the operator remains behind the projector and does not interfere with the projection, although being within the field of view of the detector.

The present invention will be hereby described according to a preferred exemplificative embodiment thereof, given by way of a non-limiting example, with reference to the annexed figures, wherein:
- figure 1 shows a perspective view of a module according to the present invention;
- figure 2 shows the module of figure 1 schematically shown, suggesting the use of the module; and

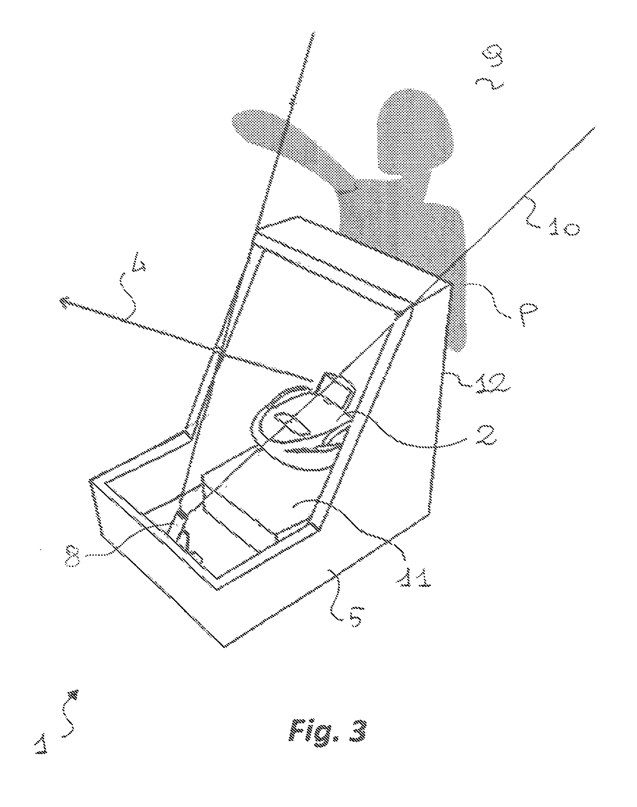

- figure 3 shows a partially sectional perspective view of the module of figure 1, wherein the role operator is highlighted.

With reference to the figures, an interactive projector module is prearranged to project images apt to be controlled by an operator and it is shown with the reference number 1.

It comprises a projector 2 of the digital type, projecting images on a screen 3 according to a frontal projecting direction 4. The projector 2 is housed within a shell 5, provided with a window 6 allowing the projection.

The shell 5 is a stiff-type one, connectable to a power supply mains, and it is prearranged to shelter the objects contained therein.

The projector 2 is placed next to the resting base 7 of said shell 5, and it projects images from the bottom to the top.

Placed inside the shell 5, the module 1 also comprises an image detector 8, also placed close to the base 7 between the projector 2 and the screen 3.

In the present exemplificative embodiment, the detector 8 is an infrared detecting sensor, capable of detecting an operator P contrasting the background, and to produce a digital information flow.

The position and the orientation of the detector 8 determine a field of view 9 according to a detecting direction 10 crossing to said projecting direction 4.

The detecting direction 10 is Also directed towards the top, in order not to frame the bust of the operator in the field of view 9, but only the arms stretched out to the screen, such as they indicate whatever projection point and, in particular, his or her hands and his or her arms, detecting accordingly the object of the projection with which the operator wishes to interact.

Then, the module 1 contains a processor 11 connected to said image detector 8 and to said projector 2, and containing an apposite image recognition software supplied by the information flow relating to the operator's hands and arms movements.

Once the images are recognized, such software is therefore capable of translating them into an input commands set, used to vary the projected images interactively with the operator's movements.

The shell 5 maintains the detector 7 and the projector 2 in a reciprocal predetermined position, such that said field of view is fixed relative to the operator P. Therefore, he or she cannot interact with the module 1 if he or she is not in the correct position, avoiding the undesired detecting of other body parts other than hands or arms.

To this end, the shell 5 has a vertical extension, substantially as a wall, providing a lower masking limit to the sensor detecting field and, at the same time, it avoids the operator to interfere with the projected images light beam on the wall.

In the present exemplificative embodiment, the processor 11 is comprised within the shell 5, so that the module 1 is physically formed by it with its content.

In particular, the sequences of images to be projected according to the operator P commands could be stored in the memory of the processor. For this purpose, the projector 2 will be of the digital type.

The detector 8 will be hidden by a lid 13 close to said extension 12, provided with a small window 14 defining the extension of field of view.

The above described module 1 could be used to create a virtual reality environment. More modules could be placed beside in order to amplify their effect, with the projection areas placed side by side so as to realize a single area.

Such a system can be applied for creating a virtual library, an advertising display, a virtual paintings or photographs exhibition, a videogame etc.. To this end, the software will be prearranged for recognizing, in addition or alternatively to hands and arms, also some playing equipment, such as, e.g., a tennis or ping-pong racket.

In any case, no contact between the operator and the module or between the operator and the projection area is envisaged. Moreover, the operator will neither need nor be able to interfere with the projected light beam. Finally, the operator will not need to be trained for using any interacting or control instrument, but he will be simply required to perform the gesture he would have performed in reality.

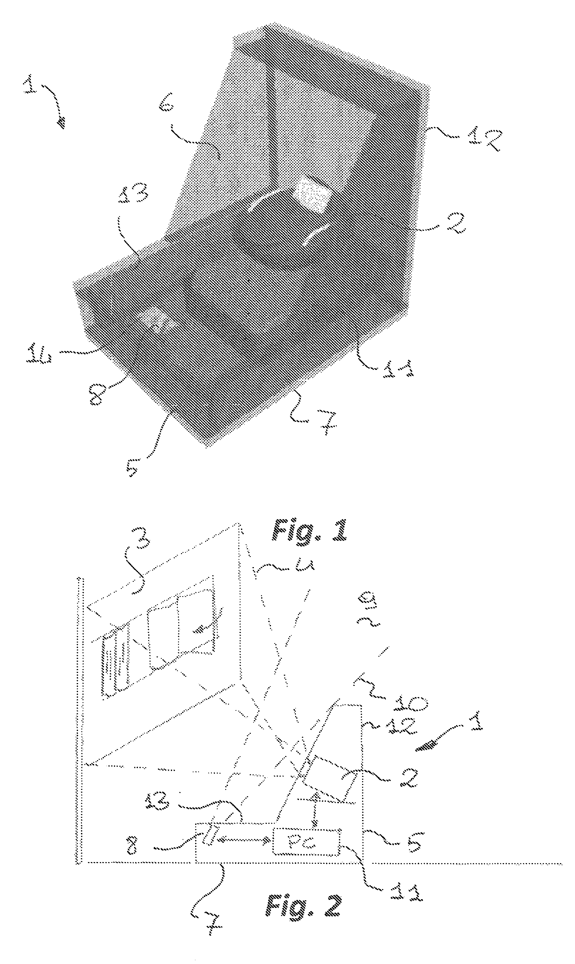

In figure 2, an theoretical use is shown: the projector projects the image of a virtual library, full of books ready to be consulted, wherein the title is highlighted in the title page.

In order to perform the consultations, the operator could easily stretch out his hands towards the desired book, and draw it back.

These gestures will be accordingly interpreted and, according to the position of the hand, the image of picking and opening the chosen book will be projected.

After this, the operator, by moving his hands so as to flip through the pages, will be actually able to vary the projected images as if the pages were actually turned over.

With a natural sequence of movements, the operator will then be able to put back the book and pick another one.

Therefore, such system could be employed for using any virtual reality environment, provided with icons. The gestures of the operator will simply substitute the pointer and will allow to interact with the system.

Obviously, numberless environments could be imagined wherein this module could be used.

To the above-described interactive projector module a person skilled in the art, in order to satisfy further and contingent needs, could effect several further modifications and variants, all however encompassed in the protective scope of the present invention, as defined by the appended claims.

## Claims

1. Interactive projector module (1), in particular for projecting images controllable by an operator (P), comprising:
• a projector (2), projecting images on a screen (3) according to a projecting direction (4);
• an image detector (8), placed between said projector (2) and said screen (3), detecting images in a field of view (9) according to a detecting direction (10) crossing with said projecting direction (4); and
• a processor (11), connected to said image detector (8) and said projector (2), and comprising an image recognition software,
such that a gesture detected in said field of view (9) is translated into an input command for said projector (2) varying accordingly the projected images.

2. Module (1) according to claim 1, comprising a rigid shell (5) having a resting base (7) and housing the projector (2) and the detector (8) and keeping them in a preset mutual position.

3. Module (1) according to claim 2, wherein the shell (5) has a vertical extension (12) forming a lower limit of said field of view (9), representing an obstacle between the screen (3) and the field of view (9).

4. Module (1) according to claim 2 or 3, wherein said shell (5) contains said processor (11) connected to the projector (2) and to the detector (7).

5. Module (1) according to claim 1, wherein said image recognition software is prearranged for recognizing dynamic images such as the movement of hands and/or arms.

6. Module (1) according to claim 1, wherein the processor (11) contains a memory wherein the images to be projected are stored, connected to said projector (8) of the digital type.

7. Module (1) according to claim 1, wherein said detector (8) is an infrared detecting sensor.

## Patentansprüche

1. Interaktives Projektormodul (1), insbesondere zum Projizieren von durch einen Bediener (P) kontrollierbare Bilder, mit:
• einem Projektor (2), der Bilder gemäß einer Projektionsrichtung (4) auf einen Bildschirm (3) projiziert;
• einem zwischen dem Projektor (2) und dem Bildschirm (3) angeordneten Bilddetektor (8), der Bilder in einem Blickfeld (9) gemäß einer Detektierrichtung (10), die mit der Projektionsrichtung (4) kreuzt, detektiert; und
• einem Prozessor (11), der mit dem Bilddetektor (8) und dem Projektor (2) verbundenen ist, und der eine Bilderkennungssoftware aufweist,
dergestalt, dass eine in dem Blickfeld (9) detektierte Ausdrucksbewegung in ein Eingangskommando für den Projektor (2) übersetzt wird, welches die projizierten Bilder entsprechend variiert.

2. Modul (1) gemäß Patentanspruch 1, mit einem festen Gehäuse (5) aufweisend eine Ruhe-Grundfläche (7) und das den Projektor (2) und den Detektor (5) unterbringt und das dieselben in einer vorgegebenen gegenseitigen Position hält.

3. Modul (1) gemäß Anspruch 2, bei dem das Gehäuse (5) eine vertikale Ausdehnung (12) hat, die eine untere Begrenzung des Blickfeldes (9) bildet, die ein Hindernis zwischen dem Bildschirm (3) und dem Blickfeld (9) bildet.

4. Modul (1) gemäß Anspruch 2 oder 3, bei dem das Gehäuse (5) den Prozessor (11) enthält, der mit dem Projektor (2) und dem Detektor (7) verbunden ist.

5. Modul (1) gemäß Anspruch 1, bei dem die Bilderkennungssoftware vorarrangiert ist, um dynamische Bilder wie die Bewegung von Händen und/oder Armen zu erkennen.

6. Modul (1) gemäß Anspruch 1, bei dem der Prozessor (11) einen Speicher aufweist, in dem die zu projizierenden Bilder gespeichert sind, welcher verbunden ist mit dem Projektor (2) vom digitalen Typus.

7. Modul (1) gemäß Anspruch 1, bei dem der Detektor (8) ein Infrarot-Detektions-Sensor ist.

## Revendications

1. Module de projeteur interactif (1) en particulier pour projeter des images contrôlables par un opérateur (P) comprenant .
• un projecteur (2) projetant des images sur un écran (3) selon une direction de projection (4) ;
• un détecteur d'image (8) placé entre ledit projecteur (2) et ledit écran (3), détectant des images dans un champ de vision (9) selon une direction de détection (10) croisant ladite direction de projection (4) ; et
• un processeur (11) connecté audit détecteur d'image (8) et audit projecteur (2) et comprenant un logiciel de reconnaissance d'image,
de telle sorte qu'un geste détecté dans ledit champ de vision (9) est traduit en une commande d'entrée pour ledit projecteur (2) variant en fonction des images projetées.

2. Module (1) selon la revendication 1, comprenant une coque rigide (5) ayant une base d'appui (7) et logeant le projecteur (2) et le détecteur (8) et les maintenant dans une position mutuelle préétablie.

3. Module (1) selon la revendication 2, dans lequel la coque (5) a un prolongement vertical (12) formant une limite inférieure dudit champ de vision (9), représentant un obstacle entre l'écran (3) et le champ de vision (9).

4. Module (1) selon la revendication 2 ou 3, dans lequel la coque (5) contient ledit processeur (11) connecté au projecteur (2) et au détecteur (7).

5. Module (1) selon la revendication 1, dans lequel ledit logiciel de reconnaissance d'image est pré-agencé pour reconnaitre des images dynamiques telles que le mouvement des mains et/ou des bras.

6. Module (1) selon la revendication 1, dans lequel le processeur (11) contient une mémoire dans laquelle les images à projeter sont stockées, connectée audit projecteur (8) du type numérique.

7. Module (1) selon la revendication 1, dans lequel ledit détecteur (8) est un capteur de détection infrarouge.
